# EUROPEAN PATENT APPLICATION

(11) **EP 1 650 077 A1**
(43) Date of publication of application: **26.04.2006**
(21) Application number: 05256438.2
(22) Date of filing: 17.10.2005
(51) Int. Cl.: B60P 1/43

(54) **Combined door and access ramp**

(30) Priority: 19.10.2004 GB 0423143
(71) Applicant: Rampdoors Limited, Adlington Macclesfield SK10 4DU (GB)
(72) Inventor: Lambert, John, Stockport Cheshire SK6 8BS (GB)
(74) Representative: Hutter, Anton

(57) **Abstract**

The invention provides an access apparatus for an access structure. The access apparatus comprises a ramp 4 operable to move between an open configuration and a closed configuration, and a door 6 operable to move between an open configuration and a closed configuration, wherein when the door 6 and the ramp 4 are both in the closed configuration, the door 6 is adapted to prevent the ramp 4 from being opened.

## Description

The present invention relates to access apparatuses for access to structures, and particularly although not exclusively, to combined door/ramp assemblies for access to structures such as buildings or vehicles.

Many vehicles such as commercial vehicles, ambulances or animal livestock transporters have a relatively large rear or side door, which may be swung open on vertically aligned hinges to provide access to the interior of the vehicle. The floor level of the interior of the vehicle is relatively high and therefore steps may be provided to assist users entering the vehicle. However, there are many circumstances in which such steps are not convenient, for example, when seeking to manoeuvre a wheeled load carrying device, such as a wheelbarrow or wheelchair into the rear of the vehicle. In such circumstances, a vertically displaceable ramp is often provided, the ramp being attached to the interior floor level, and lowered down to the ground such that the wheeled device can be pushed up the ramp and into the vehicle. The lowering and raising of the ramp is powered by an electrical supply that is positioned either close to, or near, a rear wall of the ambulance, and hydraulics.

Similarly, in the case of animal transporters, for example, horse trailers, the steps can be problematic for loading the animals in to the vehicle. A ramp is therefore often used on which the animals can walk up from the ground level to the interior floor level of the vehicle.

In addition to such vehicles having a ramp, it may also be required for the vehicle to have a door for quick access in or out of the vehicle. Problems associated with existing ramp and door assemblies are that the time required to deploy the ramp in normal operations by a paramedic is in the region of one to two minutes. This is very slow, and could be fatal in some circumstances. Another problem with such assemblies is that during the impact of a crash, the electrical supply to the ramp is intentionally terminated. Unfortunately, this renders the ramp unopenable, and therefore renders the only escape route for a wheelchair-bound person inaccessible.

Further problems with such assemblies are that the ramp and door may be opened independently of one another. This has severe safety implications, as it is then possible for a patient to open the ramp or door himself, which could and has resulted in catastrophe if the ambulance is in transit. Furthermore, exisiting ramp assemblies are unable to exceed an S.W.L. (Safe Working Load) of 350kg. Accordingly, such ramps may not be used with heavy patients, which require the assistance of a paramedic during loading and unloading from the ambulance, because the ramp is unable to take the collective weight.

In addition, the complexity of the electrical system combined with hydraulics and many moving parts are constantly troublesome due to service neglect and the elements. As a result, they have a tendency to fail, occasionally when in use.

It is therefore an aim of embodiments of the present invention to address the problems with the prior art, and to provide an improved access apparatus.

According to a first aspect of the present invention, there is provided access apparatus for an access structure, the apparatus comprising a ramp operable to move between an open configuration and a closed configuration, and a door operable to move between an open configuration and a closed configuration, wherein when the door and the ramp are both in the closed configuration, the door is adapted to prevent the ramp from being opened.

Hence, preferably, the door is operable to move from the closed configuration to the open configuration before the ramp is moveable. Preferably, the ramp is adapted to only be opened until after the door has been opened. The access structure may be a building or a vehicle, such as an ambulance. Advantageously, the access apparatus provides a safety feature that the door has to be opened by an ambulance man before the ramp can be opened. This is in contrast to existing assemblies in which the door and ramp are openable independently of one another, with consequential severe safety implications.

Preferably, the door and the ramp each comprise first and second sides, which sides correspond to the interior and exterior of the access structure, respectively. The door and/or the ramp may be opened from the interior or exterior of the access structure. However, it is preferred that the door and, preferably the ramp, are operable to be opened from the exterior of the access structure only. Advantageously, this ensures that a patient in the back of the ambulance can only exit once the ambulance man has opened the door and then the ramp from outside the ambulance.

Preferably, the door is hingedly mounted on to one side of the access structure. Preferably, the door is adapted to be opened relative to the structure by pivoting about a substantially vertical axis. Preferably, the door is mounted at a first end thereof on two vertically spaced apart hinges, which define the vertical axis.

Preferably, the ramp is hingedly mounted on to the same side of the access structure as that as the door. Preferably, the ramp is adapted to be opened relative to the structure by pivoting about a substantially horizontal axis. Preferably, the ramp is mounted at a first end thereof on two horizontally spaced apart hinges, which define the horizontal axis.

Preferably, the door and ramp are mounted on the access structure substantially adjacent each another. The door and ramp combine to form an assembly. Preferably, the door and the ramp are mounted such that when they are both in the closed configuration, second ends of the door and the ramp are substantially adjacent each other. The second end of door is the end opposite to the first end thereof. The second end of the ramp is the end adjacent the first end thereof. Preferably, when in the closed configuration, the second ends of the door and ramp are adjacent each other, and preferably engage each other. Preferably, the door and the ramp are mounted such that when they are both in the open configuration, they collectively define a continuous opening in the side of the access structure.

Preferably, the ramp comprises locking means adapted to lock the ramp in the closed configuration. Preferably, the locking means is operable to be disengaged prior to moving the ramp between the closed and open configurations. Preferably, the locking means comprises engagement means on either the ramp or the access structure, and preferably receiving means on the other of the ramp or the access structure. Preferably, the receiving means is adapted to receive the engagement means.

Preferably, the receiving means comprises at least one aperture or recess, for example, a locking boss, preferably, provided in the access structure, preferably, adjacent the ramp when the ramp is in the closed configuration. Preferably, the at least one aperture is in a frame around the ramp. It is preferred that the receiving means comprises two apertures and, preferably two locking bosses, one mounted substantially on either side of an upper portion of the ramp, when the ramp is in the closed configuration.

Preferably, the engagement means comprises at least one locking bar, preferably, provided on or in the ramp, which bar engages with the receiving means to thereby lock the ramp when in the closed configuration. Preferably, the engagement means is adapted to extend though an aperture in the end of the ramp and thereby engage the receiving means. It is preferred that the engagement means comprises two locking bars, one provided substantially on or in each side of the ramp. Preferably, the ramp comprises first guide means adapted to guide the engagement means in and out of the receiving means during actuation thereof, and preferably through the aperture in the end of the ramp. The ramp may comprise second guide means adapted to align the ramp correctly in the side of the access apparatus as it is moved into the closed configuration. This improves alignment of the engagement means with the receiving means during actuation thereof.

The engagement means may be adjustable, wherein the axial length thereof may be varied to improve engagement with the receiving means. Hence, the engagement means may comprise at least two members, which may be adjustably attached to each other, for example, by a screw and thread arrangement. The receiving means may comprise a recess suitably sized to accommodate the engagement means.

Preferably, the apparatus, and preferably, the ramp, comprises actuation means operable to engage and/or disengage the engagement means from the receiving means. Preferably, the actuation means is accessible only from outside the access structure. Preferably, the actuation means extends outwardly towards the exterior of the access structure. Advantageously, this ensures that a patient cannot get out of the ambulance until the door and hence ramp have been unlocked and opened from the outside.

Preferably, the actuation means comprises a pivotable lever, which lever is coupled to the engagement means. Preferably, the actuation means is operable to be pivoted in a first direction to thereby urge the engagement means to engage the receiving means. Preferably, the actuation means is operable to be pivoted in a second direction to thereby urge the engagement means to disengage from the receiving means. Hence, preferably, the actuation means is coupled to the engagement means, wherein rotational movement of the actuation means causes linear movement of the engagement means along an axis, which axis is substantially parallel to a longitudinal axis of the ramp.

Preferably, the actuation means is coupled to the engagement means via a rod, which is attached to the actuation means, and which preferably extends through the inside of the ramp. Preferably, the rod extends along an axis substantially transverse to the longitudinal axis of the ramp. Preferably, the rod is rotatable, and may act as an axle in the ramp translating the rotational movement of the lever to the linear movement of the engagement means. Preferably, the rod and the actuation means rotate about the same axis.

Hence, preferably, rotation of the actuation means in a first direction imparts to the engagement means translational motion progressively towards, and eventually into engagement with the receiving means. Preferably, rotation of the actuation means in a second opposite direction imparts translational motion of the engagement means progressively away from the receiving means.

Preferably, the engagement means is coupled to the rod via suitable gearing to translate rotational movement of the actuation means and hence rod in to linear movement of the engagement means. Preferably, the gearing comprises a plurality of interacting clevis arms, which translate rotational movement of the lever into linear movement of the at least one locking bar either towards or away from the at least one aperture.

The rod may comprise biasing means adapted to ensure the engagement means is suitably aligned with the receiving means. Preferably, the biasing means is provided in between the gearing and the actuation means, preferably, inside the ramp. The biasing means may comprise a spring, which may be a cushion spring.

Advantageously, the biasing means provides marginal compression on the rod and hence, handle so that the handle cannot swing freely, and stays in the position in which it is left. The biasing means therefore prevents rattling when the ambulance is in motion.

Preferably, when the ramp is locked in the closed configuration, the actuation means is adapted to extend in a direction that is substantially parallel with the plane of the ramp, and hence, the side of the access structure in which the ramp is mounted. Hence, the actuation means extends substantially vertically, and preferably, downwardly with respect to the access structure.

Preferably, when the ramp is unlocked and in the closed configuration, the actuation means is adapted to project outwardly away from the side of the access structure in which it is mounted. Preferably, when the ramp is unlocked and in the closed position, the actuation means projects at an angle greater than at least 10° from the plane of the ramp, more preferably, greater than 20°, and even more preferably greater than 30° from the plane of the ramp when the ramp is in the closed position. It is preferred that the actuation means projects at an angle that is greater than at least 40° from the plane of the ramp when the ramp is in the closed position, and preferably about 45°, from the plane of the ramp when the ramp is in the closed position. Preferably, the actuation means projects away from the plane of the ramp when the ramp is in the closed position at a maximum angle of 45°.

Preferably, the door is adapted to contact the actuation means as the door is moved from the open configuration to the closed configuration, thereby causing the actuation means to activate the locking means, i.e., the engagement means engages the receiving means. Preferably, the act of closing the door causes the actuation means to rotate, which in turn causes the engagement means to move upwardly into the receiving means thereby locking the ramp.

Preferably, the second end of the door comprises a substantially elongate portion, which elongate portion overlaps an adjacent region of the ramp when in the closed configuration. Preferably, the elongate portion extends over the portion of the ramp from which the actuation means extends. Preferably, the width of the elongate region is less than the width of the door, and is preferably, substantially reinforced. Preferably, the width of the elongate region is substantially wide to prevent it from distorting during unauthorised entry. Preferably, the elongate portion is adapted to contact the actuation means as the door is moved from the open to closed configuration, thereby locking the ramp.

However, the inventor has noticed that in some circumstances, it may be possible to rotate the actuation means manually when the ramp has been lowered down to the ground position, without closing the door on to the actuation means. Hence, if one were then to raise the ramp into the closed and vertical position before closing the door, the engagement means, being in a projected position out of the ramp, could cause damage to the external part of the access structure. It will be appreciated that if the access structure is made of a material such as fibre glass, the access structure could be badly damaged by the extended engagement means as the ramp is raised into the closed configuration.

In order to solve this problem, the apparatus preferably comprises means for preventing the engagement means from extending out of the ramp in any position other than when the ramp is in the closed configuration. Preferably, the said means comprises the second guide means, which is preferably disposed adjacent the aperture in the ramp through which the engagement means extends. It is preferred that the second guide means is substantially 'L'-shaped. Preferably, the second guide means comprises a tapered portion on a leading face thereof, i.e. an arm of the guide means, which points towards the inner face of the ramp when in the closed configuration. Advantageously, the tapered portion of the guide means presents a wider area to the locking boss, and hence, receiving means, and this facilitates the closing of the ramp in to the closed configuration.

Preferably, the guide means comprises a shut-off gate, which gate is adapted to remain closed when the ramp is in any position other than the closed configuration. Preferably, the guide means comprises a channel, which is adapted to receive a pin. Preferably, the pin is adapted to move between a first position in which it extends substantially across the aperture in the ramp through which the engagement means may project, and a second position in which the pin does not extend across the aperture in the ramp. Preferably, the second guide means comprises biasing means adapted to bias the pin towards the first position. The biasing means may comprise a spring, for example, a helical spring attached to the pin and the channel.

Hence, the biasing effect of the spring urges the pin to project out of the channel, so that it extends over the aperture in the ramp through which the engagement means extends. Hence, when the ramp is in the open position, the pins are biased under the action of their springs, so that the pins effectively block the apertures. This therefore prevents the engagement means from being able to extend therethrough when the ramp is any position except the upright, closed configuration.

It will be appreciated that the shut-off gates automatically prevent the actuation means from operating until the moment when the ramp is being closed into the vertical position. Hence, as the ramp closes, each of the two locking bosses (comprising the receiving means) are effectively moved towards and in to their respective guide means. Insodoing, the bosses force the pin against the biasing action of the biasing means back into the channel. This causes the pins to move away from the apertures in the ramp, which are thereby opened to allow the engagement means to move therethough upon actuation of the actuation means. Hence, it should be appreciated, that this safety mechanism ensures that the engagement means in the ramp are only able to extend out of the end of the ramp when it is in the closed position. At all other times, when the bosses are not in contact with the pins, the pins extend across the apertures and prevent the engagements means extending out and damaging the structure.

Preferably, the access apparatus comprises means to move the ramp between the open and closed configurations. Preferably, the movement means comprises means to counter balance the mass of the ramp as it is moved between the open and closed configurations. Preferably, the mass balancing means comprises at least one gas strut or piston, a first end of which is attached to a hinge about which the ramp pivots, and a second end of which is rigidly attached adjacent the ramp. The movement means may be contained within, a housing provided adjacent the ramp preferably, in the access structure,

Alternatively, the first end of the gas strut may be attached to the hinge about which the ramp pivots, and the second end thereof is slideably attached to guide means adjacent the ramp. Preferably, the guide means comprises a slot, which extends in a direction substantially parallel with a longitudinal axis of the ramp. Preferably, the second end of the gas strut is slideably mounted in the slot.

In one embodiment, preferably, the mass balancing means comprises first and second gas struts. Preferably, the first end of the first gas strut is attached to the hinge about which the ramp pivots, and the second end of the first gas strut is rigidly attached adjacent the ramp, and preferably, the first end of the second gas strut is attached to the hinge about which the ramp pivots and the second end thereof is slideably attached adjacent the ramp.

Preferably, the first gas strut exerts a mass balancing effect on the ramp continuously as the ramp is moved between the open and closed configuration. Preferably, the second gas strut exerts a mass balancing effect on the ramp only when the ramp forms an angle of 10° or more with the plane of the side of the access structure in which the ramp is mounted. Advantageously, and preferably, only one gas strut exerts its mass-balancing effect on the ramp when it is in the closed position, such that it can be easily opened by an operator, at which point the second gas strut.

Advantageously, and preferably, the access apparatus does not use and depend on an electrical power source for moving the ramp between open and closed configurations, as the ramp is gas-strut balanced with effortless manual movement. Deployment of the ramp in general use is approximately 5 seconds, i.e. much faster than existing assemblies. Furthermore, servicing the access apparatus is very quick and simple, as there are only three lubrication points (the base axis shaft and the locking mechanism), which require greasing once a year.

Preferably, the ramp is adapted to withstand greater than 350kg S.W.L., more preferably, greater than 400kg S.W.L., even more preferably, greater than 450kg S.W.L., and most preferably greater than 500kg S.W.L. Hence, the ramp is able to withstand much greater weights than existing assemblies.

According to another aspect of the present invention, there is provided a method of accessing a structure, the method comprising providing an access apparatus according to the first aspect, first opening the door and then opening the ramp, and then accessing the structure.

Hence, in a second aspect of the invention, there is provided a method of accessing a structure comprising an access apparatus according to the first aspect, the method comprising the steps of:-
(i) opening the door;
(ii) opening the ramp; and
(iii) accessing the structure.

Preferably, the method may further comprise closing the structure that is being accessed, by first closing the ramp, and then closing the door. Preferably, the door and ramp may be opened and closed from outside the structure only. Advantageously, use of the method according to the second aspect ensures that it is not possible to open/close the ramp and/or door from inside the structure. This is an important safety feature for the access apparatus.

It will be appreciated that an important feature of the invention are the many types of various structures, which may be fitted with an access apparatus according to the first aspect. It will be appreciated that any type of structure to which access is required may be fitted with the access apparatus during manufacture of the access structure. Alternatively, existing access structures may be retro-fitted with the apparatus according to the first aspect.

Hence, according to a third aspect of the present invention, there is provided an access structure comprising an access apparatus according to the first aspect.

The access structure may comprise a building or vehicle. Ramps tend to be required where there is a height difference of at least 1 in 12 between the level of the ground and the level of the structure in to which access is required. Hence, for example, the building may be a warehouse or the like, which has a ramp and door assembly for loading and unloading goods in and out of the warehouse. The building may be for commercial use, for example, an office, shop, nursing home, or a hospital where wheelchair or stretcher access is required. Alternatively, the vehicle may be any commercial vehicle, for example, an ambulance or an animal transporter, such as a horse trailer. The vehicle may be railway rolling stock or a delivery van, for example for post. The inventors are particularly interested in providing access to an ambulance, or a similar vehicle.

Therefore, in a fourth aspect there is provided an ambulance comprising an access apparatus according to the first aspect.

All of the features described herein (including any accompanying claims, abstract and drawings), and/or all of the steps of any method or process so disclosed, may be combined with any of the above aspects in any combination, except combinations where at least some of such features and/or steps are mutually exclusive.

For a better understanding of the invention, and to show how embodiments of the same may be carried into effect, reference will now be made, by way of example, to the accompanying diagrammatic drawings, in which:-
**Figure 1** shows a perspective rear view of an ambulance incorporating a vehicle access apparatus according to the present invention consisting of a moveable ramp and door both in a closed position;
**Figure 2** shows a perspective rear view of the ambulance illustrated in Figure 1 after the access apparatus has been partially opened;
**Figure 3** shows a perspective rear view of the ambulance illustrated in Figure 1 showing the access apparatus in a fully opened position;
**Figure 4** shows a perspective partial view of the access apparatus in a partially opened position;
**Figure 5** shows a perspective partial view of gas struts of the access apparatus;
Figure 6 shows a schematic side view of a gas strut guide of the access apparatus shown in Figure 5;
**Figure 7** shows a schematic front view of the gas strut guide shown in Figure 5;
**Figure 8** shows a partial plan view of the vehicle access apparatus shown in. Figure 1 in a closed position;
**Figure 9** shows a partial side view of an actuation lever of the access apparatus;
**Figure 10** shows a side view of the lever shown in Figure 9;
**Figure 11** shows side views of clevis arms of the access apparatus;
**Figure 12** shows a plan view of the lever and clevis arm of the apparatus;
**Figure 13** shows side views of the lever at two different positions;
**Figures 14** and **15** show side views of an adjustable plunger of the access apparatus;
**Figures 16** and **17** show plan and side views, respectively, of a lock boss of the access apparatus;
**Figure 18** shows a partial section plan view of the end of the ramp;
**Figure 19** shows plan and side views of an L-shaped ramp guide and associated pin in accordance with the invention; and
**Figure 20** shows a partial section side view of the end of the ramp in a closed position.

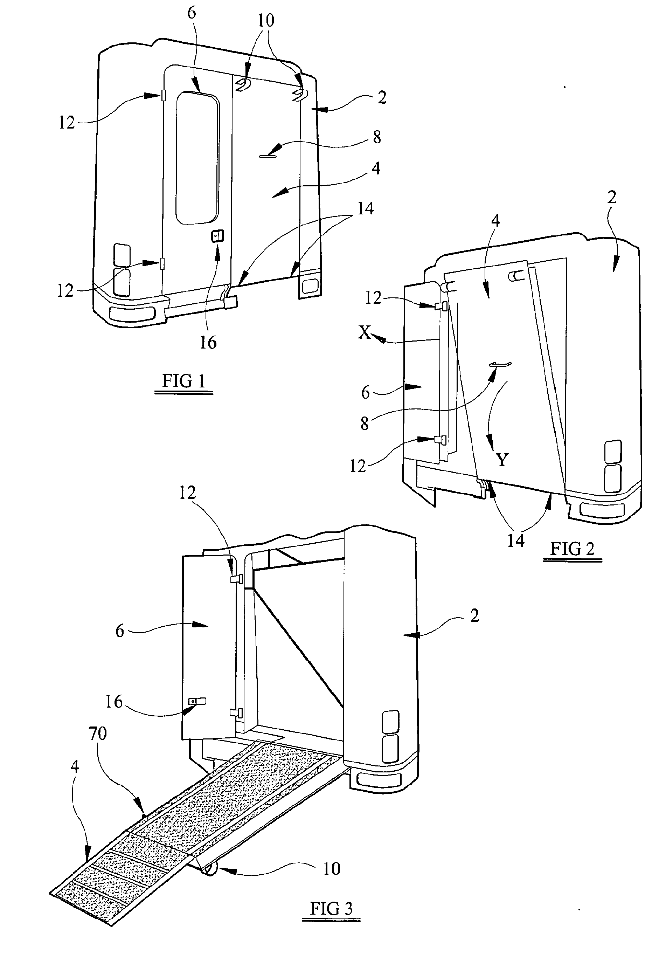

Referring to Figure 1, there is shown the back of an ambulance 2, which receives a ramp 4. The ramp 4 has a handle 8 located approximately in the centre thereof, and two spaced apart feet 10, which are located at either side at the top of the ramp 4. The ramp 4 is mounted on the back of the ambulance 2 via two horizontally aligned hinges 14 along its base.

The ambulance 2 also receives a door 6, which is located immediately adjacent the ramp 4. The door 6 is mounted on the back of the ambulance 2 via two vertically aligned binges 12 along the opposite side of the door 6 to that of the ramp 4. The door 6 supports a handle 16 by which it may be opened and closed, and is key lockable. On the inside of the door 6, there is provided a lock override in line with VCA Regulations, so that the door 6 could be opened from the inside in case of emergency.

Referring to Figure 2, the door 6 is shown having been opened by pulling on it using handle 16, such that it pivots outwardly as indicated by arrow X about a vertical axis formed between the two vertically aligned hinges 12. Once the door 6 has been opened, the ramp 4 may then be pulled downwardly as indicated by arrow Y using handle 8 such that it pivots about a horizontal axis formed between the two horizontally aligned hinges 14, until it reaches a fully extended position as shown in Figure 3. When the ramp 4 is in the fully opened position, one may walk up or down it, or push wheel chairs or stretchers (not shown) into or out of the ambulance 2. Also, one may walk in or out the ambulance 2 via the opened side door 6.

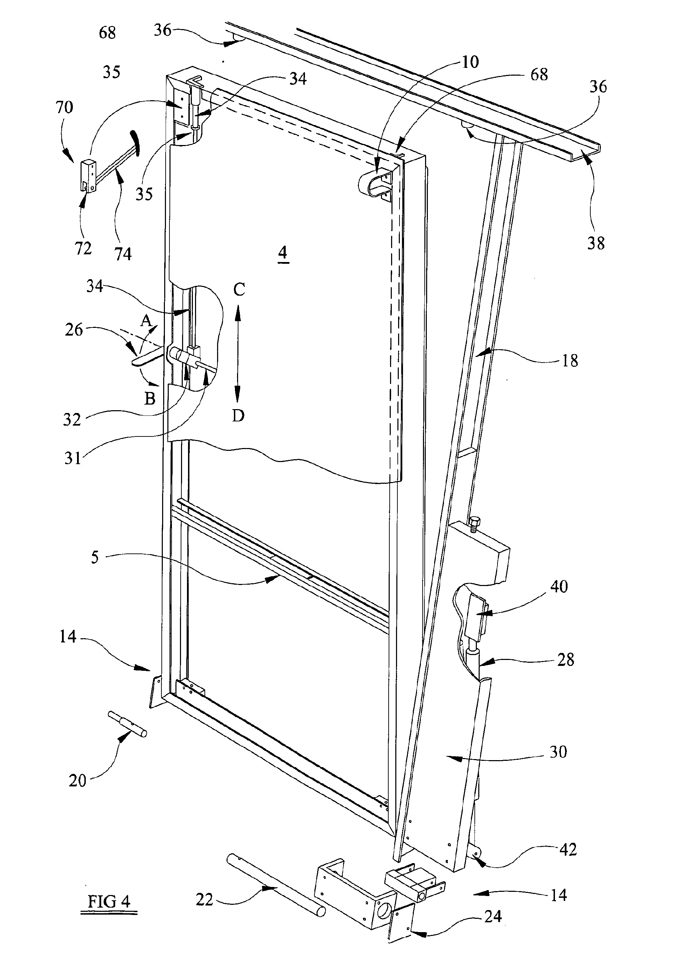

As shown in Figure 4, the ramp 4 is fitted with a pull lever 70, which is attached to the side thereof adjacent the door 6, and is provided to assist a user pull up and close the ramp 4. The pull lever 70 has a body 72, which is fastened to the side of the ramp 4 via rivets, and a swing arm 74 pivotally attached to the body 72. When the ramp 4 is in the fully open position as illustrated in Figure 3, a user can grip on to the arm 74 without excessively bending over, and then pull on the arm 74 so that the ramp 4 can be closed. Hence, the pull lever 70 means that the ramp can be closed using a straight back.

Referring to Figure 4, the ramp 4 and associated apparatus are shown in detail. The side door 6 has been omitted from the figure for clarity. When the ramp 4 is in the closed configuration, an upper portion of the ramp 4 is surrounded by a jam lintel 38, and a side of the ramp 4 opposite to that of door 6 is surrounded by a frame 18. Figure 4 shows a horizontal pivot pin 20, which forms one of the horizontally aligned hinges 14 towards one side of the base of the ramp 4. The second horizontally aligned hinge 14 consists of a horizontal pivot pin 22 mounted into a bracket 24 towards the opposite side of the base of the ramp 4. The two pivot pins 20,22 of hinges 14 are located on the same axis, around which the ramp 4 may be pivoted either upwardly or downwardly as shown in Figure 2. The ramp 4 also includes a number of internal strengthening struts 5, which extend across the inside of the ramp 4. The struts 5 provide support for the ramp 4 for when heavy wheeled load carrying devices, such as wheel chairs, wheeled stretchers etc, are carried on and off the ambulance.

Approximately in the middle of the ramp 4, there is provided an actuation lever 26, which extends out of the side of the ramp that is adjacent the door 6, when they are in the closed position. The lever 26 is connected to a rod 31, which extends horizontally through the inside of the ramp 4 towards an opposite side thereof. Two vertically aligned adjustable plungers 34 are provided on the inside of the ramp 4 on either side thereof. The plungers 34 are coupled to either side of the rod 31 by clevis arms 32. The end of each adjustable plunger 34 that is distal from the point of contact with the rod 31 extends through a guide 35. The guide 35 guides that end of the plunger 34 to slide in and out of two top lock bosses 36, which are secured in to the jam lintel 38, upon rotation of the actuation lever 26.

Downward rotation of the actuation lever 26 in a direction indicated by arrow B in Figure 4, causes the rod 31 to rotate in the same direction. This rotation is coupled by the clevis arms 32 to the adjustable plungers 34, thereby causing the latter to be urged upwardly in the ramp 4 in a direction as indicated by arrow C. This upwards movement causes the ends of the plungers 34 to enter the two lock bosses 36, thereby locking the ramp 4 in the closed position.

Conversely, upward rotation of the lever 26 in a direction indicated by arrow A in Figure 4, causes the rod 31 to rotate in an opposite direction to when being closed. This causes the adjustable plungers 34 to be pulled downwardly in a direction as indicated by arrow D away from the lock bosses 56. This causes the ends of the plungers 34 to exit the lock bosses 36, thereby unlocking the ramp 4, allowing it to be opened.

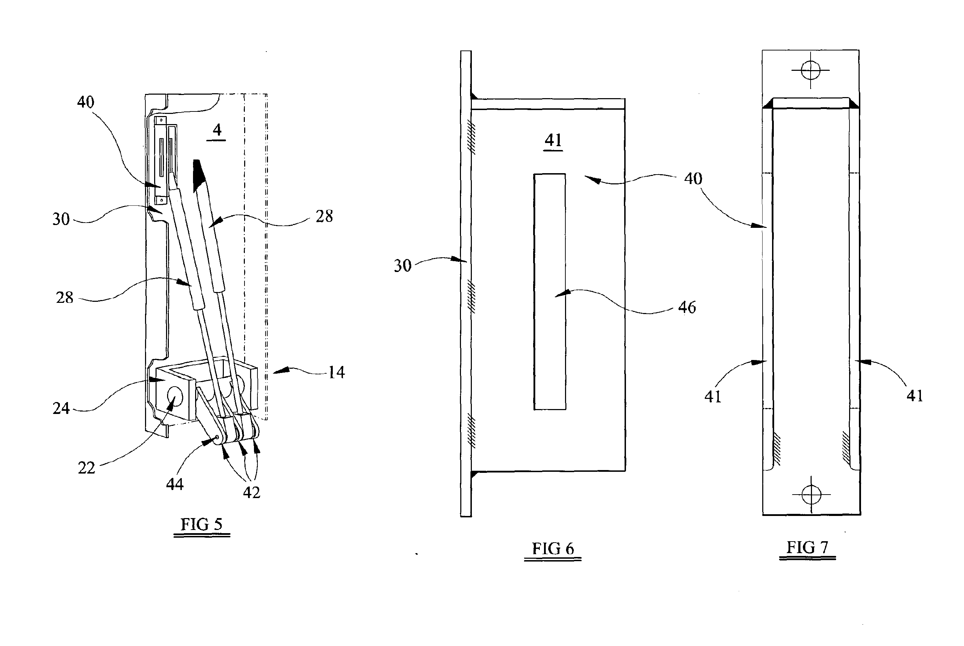

Referring to Figure 5, two gas struts 28 are shown attached to one of the horizontally aligned hinges 14 at the bottom of the ramp 4. The two gas struts 28 are contained within a housing 30 that it attached to the side of the ramp frame 18. The gas struts 28 provide a mass balancing effect on the ramp 4 as it is being moved between the open and closed positions. The gas struts 28 each have a first upper end, and a second lower end. The second lower ends of each strut 28 are coupled or pinned to the pivot pin 22 of the horizontally aligned hinge 14. The pin 22 is rotatably supported by the bracket 24, which is itself attached to the housing 30. Three flanges 42 extend transversely away from the pin 22, which flanges 42 are connected to the first lower end of the two gas struts 28 via a pin 44, which extends therethrough.

The upper end of one of the two gas struts 28 (the right hand strut 28 illustrated in Figure 5) is rigidly attached further up the housing 30. Hence, it is pinned at both ends. This strut 28 is non-valved, and is preloaded to 2000N, but has a maximum capacity of 5500N. The upper end of the other gas strut 28 (the left hand strut 28 illustrated in Figure 5) is slideably supported in a guide 40, which is attached further up the housing 30. Hence, this strut is pinned at the lower end, and slideably retained in the guide 40 at the other end. This strut 28 is valved and is therefore adjustable. It is balanced at 2300N, but has a maximum capacity of 5500N.

As shown in Figures 6 and 7, the guide 40 for the gas strut 28 consists of two mutually opposing side walls 41, each having an elongate slot 46 extending therealong. The upper end of one of the two gas struts 28 is slideably attached to the two slots 46 in the guide 40 such that it may slide upwardly and downwardly therealong depending on whether the ramp 4 is being opened or closed.

The first gas strut 28, which is pinned at both ends, counter-balances the weight of the ramp 4 as it is pulled downwardly from the closed to open positions. This ensures that the ramp 4 does not fall open too quickly. When the ramp 4 is in the closed position, the second (upper) end of the second strut 28 is at the top of the slot 46 in the guide 40. As the user pulls the ramp 4 downwardly, with its mass passing through the pivot axis, the second end of the strut 28 slides down the slot 46, until the ramp is at an angle of about 20° from the vertical, at which point, the second end of the strut 28 has reached the bottom of the slot 46 in the guide 40. At this point, the mass-balancing effect of the second gas strut 28 now comes into play exerting its counter-balancing effect on the ramp 4. The reason only one of the gas struts 28 exerts its effect on the ramp 4 when it is closed, is so that it possible for a user to pull the ramp 4 open. Once the ramp 4 has moved to a partially open position (about 20° from the vertical), when its effective weight is greater, the second strut 28 exerts its effect thereby assisting the user. Hence, there is no need for a complicated system of hydraulics.

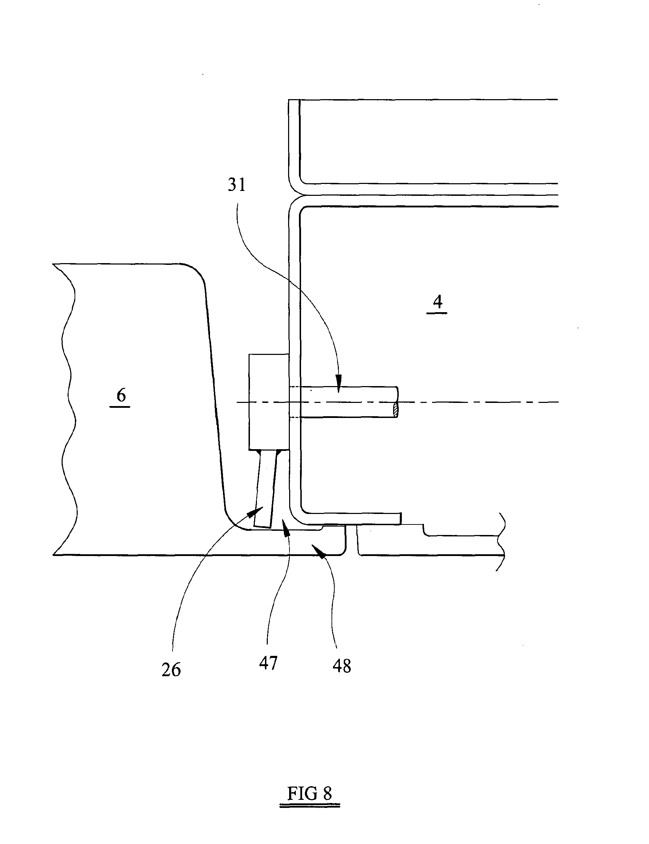

Referring to Figure 8, there is shown the respective relationship of the door 6, ramp 4 and the actuation lever 26, when the access apparatus is in the closed configuration. The figure shows there is a small gap 47 at the point where the edges of the door 6 and the ramp 4 meet. An overlap 48, known as an astragal, extends from the door 6 over the gap 47. The astragal covers over and closes the clearance gap 47 for the purpose of providing a weather seal, minimizing the passage of light between the doors, and also for preventing unauthorised access to the actuation lever 26 from the outside of the ambulance 2. Hence, the door 6 must first be opened, thereby exposing the actuation lever 26, before the ramp 4 can be unlocked and lowered down to the ground level. Similarly, the ramp 4 must be raised up and locked in position, before the door 6 can be closed.

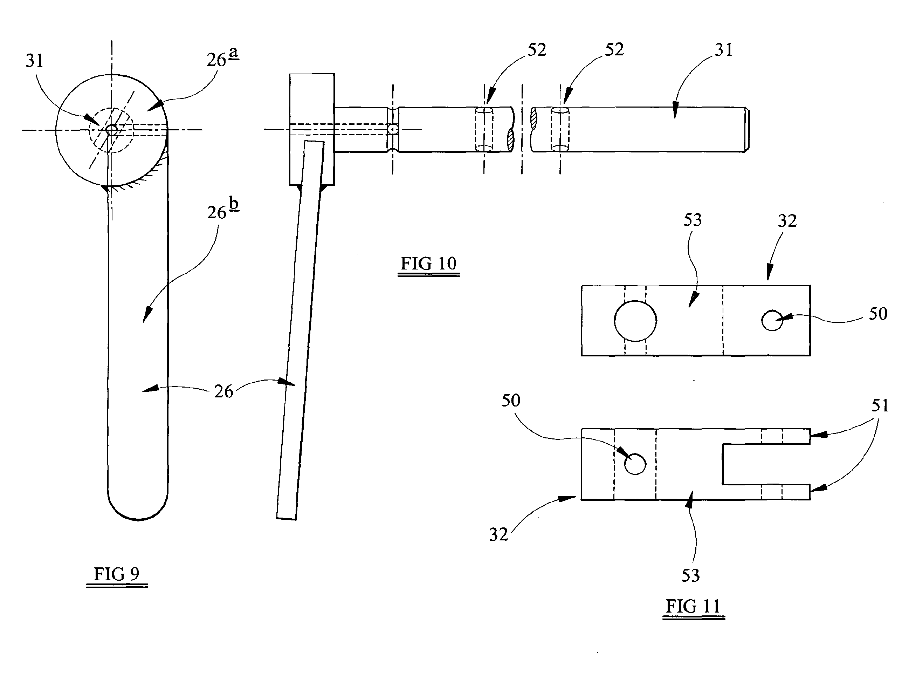

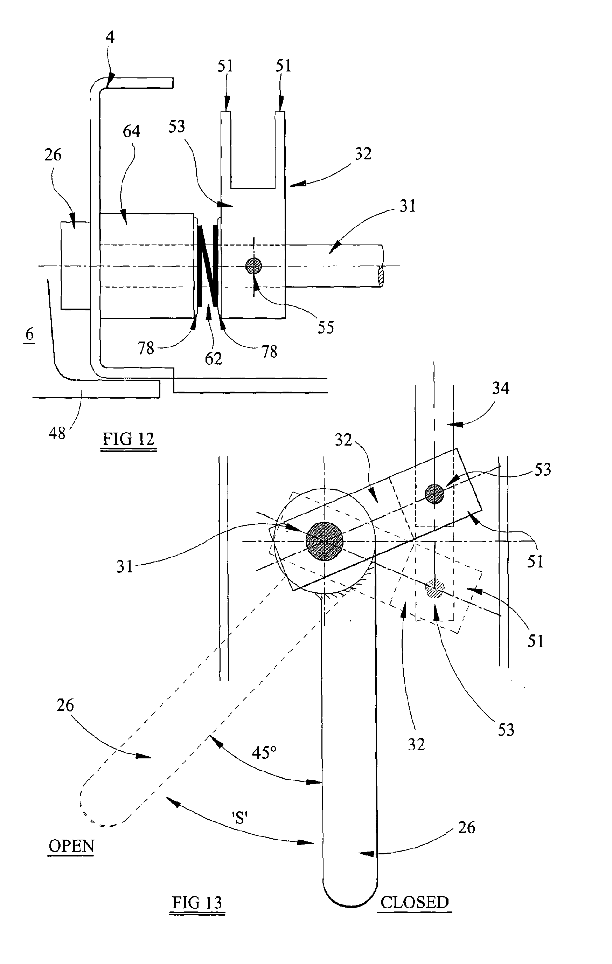

Referring to Figures 9 and 10, the actuation lever 26 is shown in greater detail. The lever 9 has an upper circular head portion 26a, to which the rod 31 is attached, and an clongate hand grip portion 26b, which is gripped during actuation. As shown in Figure 10, the rod 31 has two small channels 52 extending therethrough. The clevis arms 32 are attached to the rod 31 by means of these two channels 52.

Referring to Figure 11, the clevis arms 32 are shown in greater detail in plan and side view. Each clevis arm 32 has a body portion 53 having a first aperture 50 extending therethrough, and two flanges 51, which extend away from the body portion 53, each flange 51 having a second aperture 50 extending therethough. The apertures 50 are sized to receive pins 53,55 as shown in Figures 12 and 13.

Referring to Figure 12, the clevis arms 32 are attached to the rod 31 by inserting a pin 55 through the first aperture 50 of the clevis arm 32, and through the aperture 52 in the rod 31. A boss 64 and helical cushion spring 62, which is sandwiched between two washers 78, are provided inside the ramp 4 between the clevis arm 32 and the actuation lever 26. The spring 62 is provided to ensure the clevis arm 32 and, hence, the adjustable plungers 34 are maintained in the correct position on the rod 31, and therefore correctly aligned with the lock bosses 36. The arrangement of boss 64, spring 62 and two washers 78 act as a friction clutch providing compression on the rod 31 and hence, handle 26. This is so that the handle 26 cannot swing freely, and stays in the position it is left at, for example, at about 45° when the ramp 4 is opened. Furthermore, the friction clutch prevents rattling when the ambulance 2 is in motion.

Referring to Figure 13, there are shown the actuation lever 26, one clevis arm 32 and one plunger 34 in two positions, i.e. when the ramp 4 is opened and closed. When the ramp 4 is in the closed and locked configuration, the lever 26 points downwardly such that the two clevis arms 32 point generally upwardly at an angle of approximately 30° with the horizontal. This in turn urges the plungers 34 to extend upwardly so that they engage the two lock bosses 36 in the jam lintel 38. When the ramp is in the open and unlocked configuration, the lever 26 forms an angle of approximately 45° with the vertical. The clevis arms 32 point generally downwardly at an angle of approximately 30° with the horizontal. This in turn withdraws the plungers from the lock bosses 36. Hence, it will be appreciated that the actuation lever 26 can be moved between the open and closed positions as indicated by arrow 'S' in Figure 13.

The access apparatus is used as follows. The door 6 must first be opened, thereby exposing the actuation lever 26, before the ramp 4 can be unlocked via the actuation lever 26, and lowered down to the ground level. Conversely, the ramp 4 has to be raised up and locked in position, before the door 6 can be closed. Therefore, a very useful safety feature of the access apparatus is that the act of fully closing the door 6 ensures that the ramp 4 is automatically locked. This is because, as the door 6 is closed, the rear of the door 6 contacts the actuation lever 26, which extends out at an angle of about 45° with the vertical. This contact ensures that the lever 26 is pushed backwards until it extends vertically downwardly, thereby locking the ramp 4 as the door 6 is fully closed. Hence, it is not possible to open the ramp 4 either internally or externally without firstly opening the side door 6.

The inventor has designed a further operating safety feature for the ramp 4. At present without the additional safety feature discussed below, the actuation lever 26 could be rotated when the ramp 4 has been lowered down to the ground position. Hence, if one were then to raise the ramp 4 into the closed position, i.e. in the vertical position in the jam lintel 38, the plungers 34b, being in a projected position, could cause damage to the external part of the jam lintel 38. If the lintel 38 is made of fibre glass, it will be appreciated that the lintel 38 could be badly damaged.

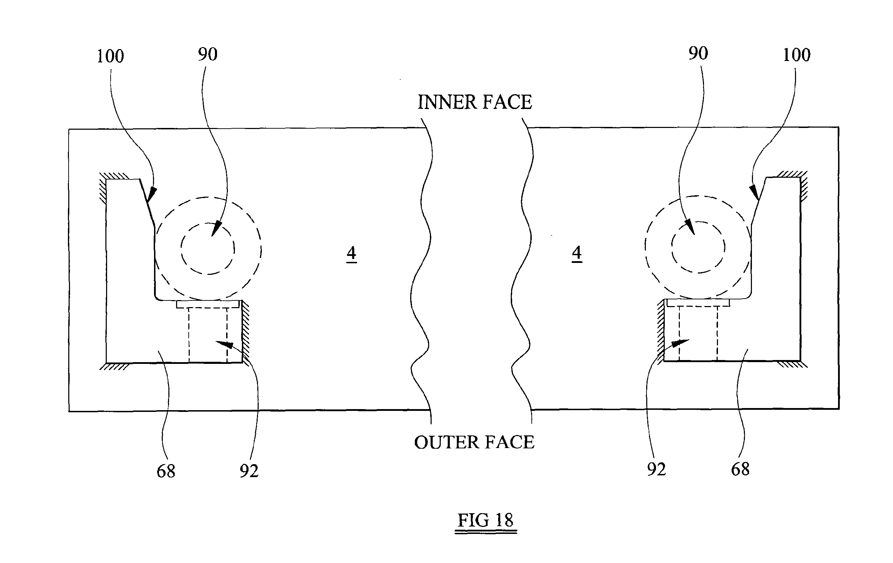

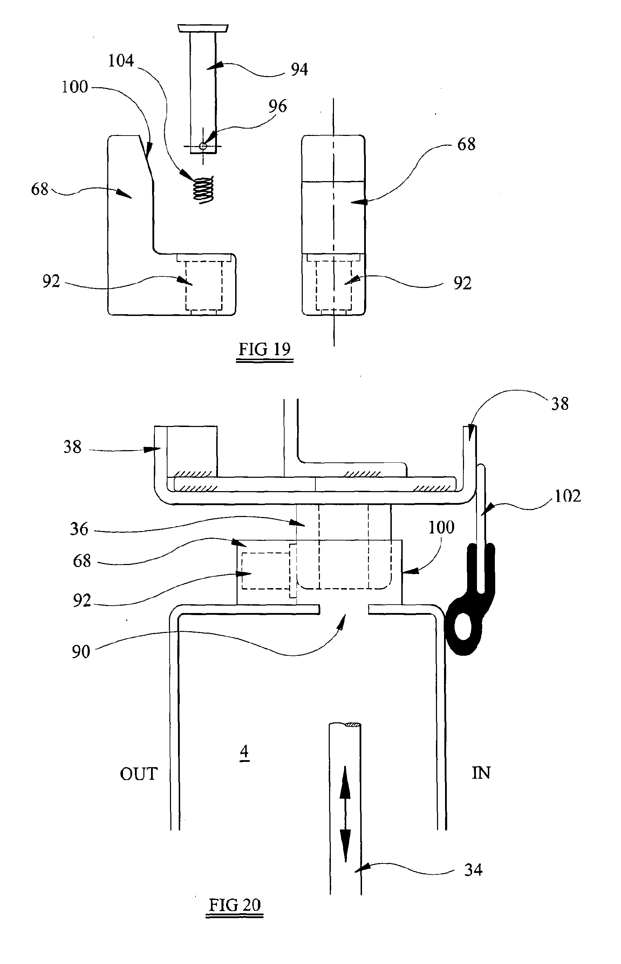

In order to solve this problem, as shown in Figures 2, and in more detail in Figures 18-20, the top of the ramp 4 has two 'L'-shaped ramp guides 68, one either side of where the plungers 34 are urged out of the top of the ramp 4. The guides 68 ensure the ramp 4 aligns correctly with the locking bosses 36 so that, upon actuation, the plungers 34 are urged correctly into the bosses 36. The leading face of the two guides 68 is tapered 100 such that a greater area is presented to the locking bosses 36 as the ramp 4 is closed. The rear face of the guides 68 is flat (i.e. extends in a direction parallel to the plane of the ramp 4) to prevent the ramp 4 from closing too far, i.e. beyond the bosses 36, as shown in Figure 20.

Referring to Figure 18, there is shown the two 'L'-shaped ramp guides 68 in position on the end of the ramp 4. Each guide 68 is positioned around an aperture 90 through which the respective plungers 34 may extend in and out of the ramp 4. As can be seen in Figures 18 and 19, each guide 68 has a tapered portion 100 on the leading face, ie. the arm of the guide 68 which points towards the inner face of the ramp 4 when in the closed position. The tapered portion 100 presents a wider area, which is presented to the locking boss 36, which facilitates the closing of the ramp 4.

As shown in Figures 18 to 20, each guide 68 is provided with a channel 92, which extends substantially parallel with the plane of the end of the ramp 4. The channel 92 is adapted to receive a moveable pin 94, as shown in Figure 19. The pin 94 includes an aperture 96 extending through one end thereof to which a helical spring 104 is attached. The opposite end of the spring 104 is attached to the base of the channel 92. Hence, the biasing effect of the spring 104 urges the pin 94 to project out of the channel 92, so that it extends over the aperture 90 through which the plunger 34 extends. Hence, when the ramp is in the open position, the pins are biased under the action of their springs 104, so that the pins 104 effectively block the apertures 90. This therefore prevents the plungers 34 from being able to extend therethrough when the ramp is any position except the upright, closed position, ie. the pins 94 act as sprung-loaded shut-off gates.

The shut-off gates automatically prevent the operating lever 26 from operating until the moment when the ramp 4 is being closed into the vertical position. Hence, as the ramp 4 closes, each of the two bosses 36 in the jam lintel 38 is effectively moved towards and in to their respective guide 68. Insodoing, the bosses 36 force the pin 94 against the biasing action of the spring 104 back into the channel 92. This causes the pins 104 to move away from the apertures 90, which are thereby opened to allow the plungers 34 to move therethough upon actuation of the lever 26. Hence, it should be appreciated, that this safety mechanism ensures that the plungers 34 in the ramp 4 are only able to extend out of the end of the ramp when it is in the closed position. At all other times, when the bosses 36 are not in contact with the pins 94, the pins extend across the apertures 90 and prevent the plungers 34 extending out and damaging the lintel 3 8.

As can also be seen in Figure 20, there is provided a seal 102, which extends around the inside perimeter of the ramp 4 (and door 6). The seal 102 is made of a resilient material, such as rubber, and is secured to the jam lintel 38, but extends over the gaps between the lintel 38 and ramp 4, the lintel 38 and the door 6, and the door 6 and the ramp 4. The seal 102 prevents draughts, and also prevents someone on the inside of the ambulance 2 from jamming their fingers in the gap.

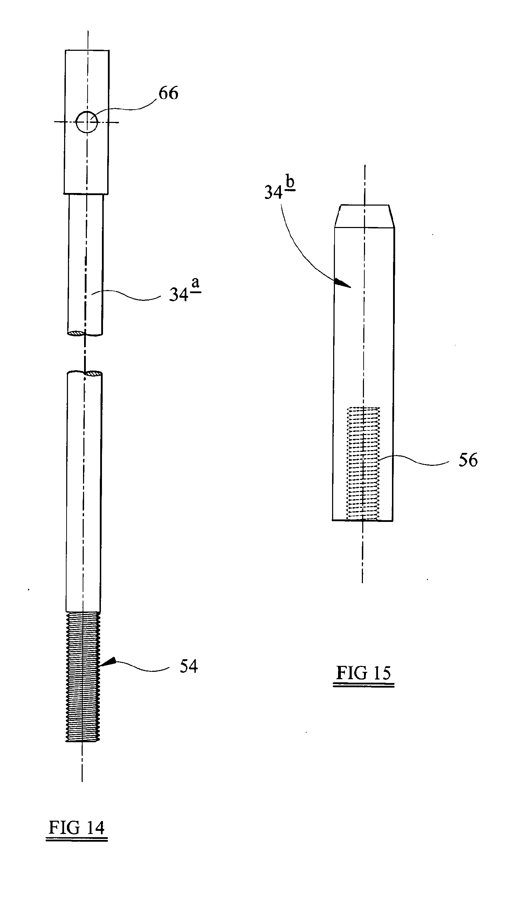

Referring to Figures 14 and 15, there is shown the adjustable plunger 34 in more detail. The plunger 34 consists of a long rod 34a and a short rod 34b, which are connected together by threaded engagement. The longer of the two rods 34a has a threaded section 54 at one end thereof, which threads into a similarly threaded aperture 56 of the shorter rod 34b. The opposite end of the longer rod 34a has an aperture extending therethrough by which it is attached to the aperture 50 extending through the flanges 51 of the clevis arm 32 by a pin 53.

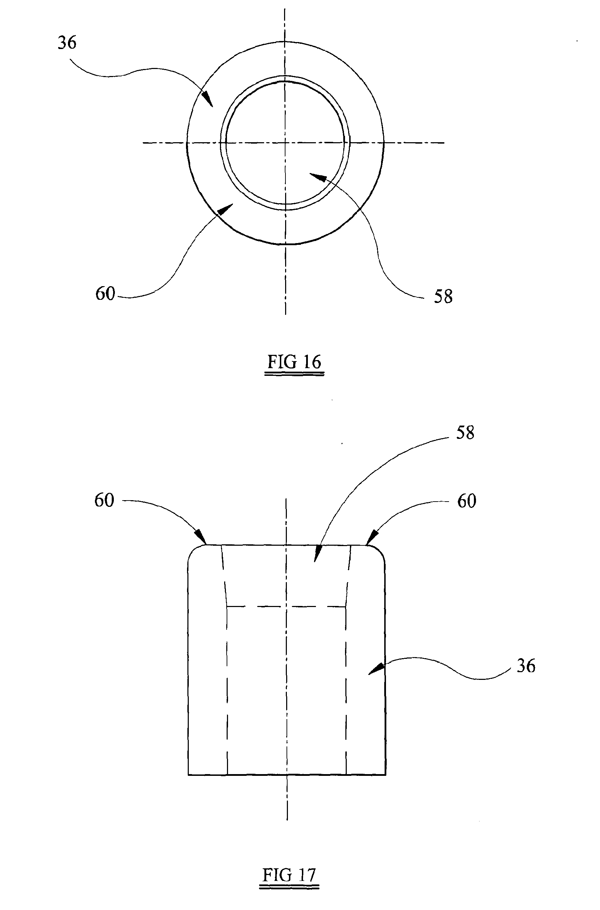

Referring to Figures 16 and 17, there is shown the lock bosses 36 in greater detail. The bosses 36 have an enforced thick side wall 60, which surrounds a circular recess that is sized to accommodate the plunger 34.

Advantages of the access apparatus according to the invention reside in the easy operation and maintenance of the ramp 4 and door 6. The locking mechanism for the ramp 4 has been crash-tested and has proved to be very safe when receiving shocks from the rear direction. Furthermore, because the apparatus does not use powered hydraulics, only the locking plungers 34, and the gas struts 28, there are no safety implications should there be a power failure during a crash, i.e. the ramp 4 and door 6 can be manually opened from the outside. Accordingly, should there be a crash, it should be straightforward to release anybody, particularly wheelchair-bound patients who are trapped inside by manually unlocking the ramp 4.

Because of the safety feature of having to unlock and open the side door 6 from the outside before the ramp 4 can be opened and lowered, it is not possible for patients inside the ambulance to get out by themselves, until the door 6 has been opened from the outside by the ambulance man. In addition, the apparatus may be easily retrofitted in to existing ambulances. The access apparatus also may be fitted into other commercial vehicles requiring a ramp 4 and adjacent door 6, for example, a livestock trailer, such as a borsebox.

## Claims

1. Access apparatus for an access structure, the apparatus comprising a ramp operable to move between an open configuration and a closed configuration, and a door operable to move between an open configuration and a closed configuration, wherein when the door and the ramp are both in the closed configuration, the door is adapted to prevent the ramp from being opened.

2. Access apparatus according to claim 1, wherein the ramp is adapted to only be opened until after the door has been opened.

3. Access apparatus according to either claim 1 or 2, wherein the door and the ramp are operable to be opened from the exterior of the access structure only.

4. Access apparatus according to any preceding claim, wherein the ramp comprises locking means adapted to lock the ramp in the closed configuration.

5. Access apparatus as claimed in claim 4, wherein the locking means comprises engagement means on either the ramp or the access structure, and receiving means on the other of the ramp or the access structure.

6. Access apparatus according to claim 5, wherein the receiving means comprises at least one aperture or recess.

7. Access apparatus according to either claim 5 or claim 6, wherein the engagement means comprises at least one locking bar.

8. Access apparatus according to any one of claims 5 to 7, wherein the ramp comprises first guide means adapted to guide the engagement means in and out of the receiving means during actuation thereof.

9. Access apparatus according to any preceding claim, wherein the ramp comprises second guide means adapted to align the ramp correctly in the side of the access apparatus as it is moved into the closed configuration.

10. Access apparatus according to any one of claims 5 to 9, wherein the apparatus comprises actuation means operable to engage and/or disengage the engagement means from the receiving means.

11. Access apparatus according to claim 10, wherein the actuation means comprises a pivotable lever, which lever is coupled to the engagement means.

12. Access apparatus according to either claim 10 or claim 11, wherein the actuation means is coupled to the engagement means via a rod.

13. Access apparatus according to any one of 10 to 12, wherein rotation of the actuation means in a first direction imparts to the engagement means translational motion progressively towards, and eventually into engagement with the receiving means.

14. Access apparatus according to claim 13, wherein rotation of the actuation means in a second opposite direction imparts translational motion of the engagement means progressively away from the receiving means.

15. Access apparatus according to any one of claims 12 to 14, wherein the engagement means is coupled to the rod via suitable gearing to translate rotational movement of the actuation means and hence rod in to linear movement of the engagement means.

16. Access apparatus according to anyone of claims 10 to 15, wherein when the ramp is unlocked and in the closed configuration, the actuation means is adapted to project outwardly away from the side of the access structure in which it is mounted.

17. Access apparatus according to any one of claims 10 to 16, wherein the door is adapted to contact the actuation means as the door is moved from the open configuration to the closed configuration, thereby causing the actuation means to activate the locking means.

18. Access apparatus according to any preceding claim, wherein the access apparatus comprises mass balancing means to counter balance the mass of the ramp as it is moved between the open and closed configurations.

19. Access apparatus according to claim 18, wherein the mass balancing means comprises at least one gas strut or piston, a first end of which is attached to a hinge about which the ramp pivots, and a second end of which is rigidly attached adjacent the ramp.

20. A method of accessing a structure comprising an access apparatus according to any one of claims 1 to 19, the method comprising the steps of:-
(i) opening the door;
(ii) opening the ramp; and
(iii) accessing the structure.

21. An access structure comprising an access apparatus according to any one of claims 1 to 19.

22. An ambulance comprising an access apparatus according to any one of claims 1 to 19.
